# EUROPÄISCHE PATENTSCHRIFT

(11) **EP 3 381 335 B1**
(45) Veröffentlichungstag und Bekanntmachung des Hinweises auf die Patenterteilung: **22.07.2020**
(21) Anmeldenummer: 18000259.4
(22) Anmeldetag: 15.03.2018
(51) Int. Cl.: A47J 31/00, A47J 31/20, A47J 31/06

(54) **VORRICHTUNG UND VERFAHREN ZUR ZUBEREITUNG EINES FILTERKAFFEE-GETRÄNKES**
DEVICE AND METHOD FOR PREPARING A FILTER COFFEE DRINK
DISPOSITIF ET PROCÉDÉ DE PRÉPARATION D'UNE BOISSON À CAFÉ FILTRÉE

(30) Priorität: 27.03.2017 DE 102017002943
(43) Veröffentlichungstag der Anmeldung: 03.10.2018
(73) Patentinhaber: Hermsen, Manfred, 28237 Bremen (DE)
(72) Erfinder: Hermsen, Manfred, 28237 Bremen (DE)
(74) Vertreter: Ellberg, Nils

(56) Entgegenhaltungen:
- WO-A2-2010/101658
- CH-A- 243 568
- DE-C- 548 232
- DE-U1- 29 906 743
- GB-A- 2 340 027
- US-A- 503 563
- US-A- 2 645 173

## Beschreibung

Die Erfindung befasst sich mit der manuellen Zubereitung eines Filterkaffee-Getränkes mit Hilfe einer Vorrichtung entsprechend des Anspruchs 1.

Die Zubereitung eines Kaffeegetränkes erfolgt prinzipiell durch den Kontakt von gemahlenem Kaffee (Kaffeemehl) mit heißem bzw. kochendem Wasser. Die Trennung des Wassers mit den gelösten Feststoffen des Kaffees von dem nicht gelösten Feststoffanteil (Kaffeesatz) bei der manuellen Zubereitungsmethode (um die es sich hier handelt) erfolgt in der Regel mit Hilfe von Papier als Filter mit dem Vorteil, dass ein äußerst klares Getränk erzeugt werden kann, aber mit dem Nachteil, dass Papier nicht geschmacksneutral ist und immer wieder neu bereitgehalten werden muss. Darum werden häufig (Dauer-)Filter aus Edelstahl oder Kunststoff eingesetzt, die allerdings oft nicht ausreichend feinporig sind, um ein mit dem Papier-Filter hergestelltes vergleichbar klares Getränk zu erhalten oder die so feinporig sind, dass sie leicht verstopfen und schwierig zu reinigen sind. Eine Lösung dieser Problematik ist mit der Filtervorrichtung gemäß DE 2 207 839 vorgeschlagen worden, die allerdings gewisse Nachteile konstruktiver Art und in der Anwendung aufweist, die mit der erfindungsgemäßen Vorrichtung vermieden werden.

Aus US 2 645 173, DE 299 06 743 U1 und DE 548 232 sind Vorrichtungen bekannt, in denen Tee oder Kaffeepulver in einen Siebeinsatz gegeben und dieser in eine Kanne eingeführt wird, in der sich (heißes) Wasser befindet. Das in der Kanne befindliche Wasser dringt durch die Wandungen des Siebeinsatzes ein und vermischt sich mit dem Tee oder Kaffeepulver. Nach einer gewissen Einwirkzeit wird der Siebeinsatz aus der Kanne herausgezogen. Auch hier bestehen die eingangs genannten Probleme. Ferner sind Vorrichtungen zum manuellen Bereiten von Filterkaffee aus den Druckschriften GB234027A und WO2010/101658A2 bekannt.

Der Erfindung liegt die Aufgabe zugrunde, die Zubereitung eines Filterkaffee-Getränkes durch eine neuartige Ausbildung der Zubereitungsvorrichtung (Filtervorrichtung) und dadurch ermöglichte einfache und praktische Zubereitungsweise (von kleineren und auch größeren Mengen pro Zubereitung) derart zu verbessern, dass die Herstellung eines in Bezug auf Geschmack und Aroma qualitativ besonders hochwertigen Getränkes ermöglicht wird.

Zur Lösung dieser Aufgabe ist die erfindungsgemäße Vorrichtung mit den Merkmalen des Anspruchs 1 ausgebildet.

Die erfindungsgemäße Vorrichtung besteht im Wesentlichen aus zwei Behältern, nämlich aus einem Aufnahmegefäß für Wasser und Kaffee, nachfolgend als Filtertopf bezeichnet und einem Behälter für das fertige Getränk, nachfolgend als Kaffeebehälter bezeichnet. In der Ausgangsstellung ist der Filtertopf aufgrund entsprechender Größe und Gestalt (nahezu) vollständig innerhalb des Kaffeebehälters angeordnet. Im Bodenbereich des Filtertopfes befindet sich ein als Siebgewebe aus Metall (Edelstahl) oder Kunststoff ausgebildeter Filter, vorzugsweise in der Ausführung als Filterboden des Filtertopfes. In dieser Ausgangsstellung ist der Filtertopf gegenüber dem Boden des Kaffeebehälters abgedichtet, vorzugsweise durch druckbelastetes Abstützen des Filtertopfes auf dem Boden des Kaffeebehälters.

Bei der Zubereitung des Kaffeegetränkes wird erfindungsgemäß so verfahren, dass zunächst kochendes Wasser in den Filtertopf gegeben wird, wobei aufgrund der dichtenden Abstützung des Filtertopfes auf dem Boden des Kaffeebehälters das Wasser im Filtertopf gehalten wird. Sodann wird eine dosierte Menge an Kaffeemehl in das erhitzte Wasser gegeben und mit diesem verrührt oder (bei kleineren Mengen Wasser und Kaffee) durch Schwenken der Filtervorrichtung in diesem verteilt. Dabei werden die bei ca. 100° Celsius wasserlöslichen Kaffeefeststoffe schonend aus dem Kaffee gelöst.

Als weiterer Schritt zur Herstellung des fertigen Kaffeegetränkes wird der Filtertopf innerhalb des Kaffeebehälters aus der Ausgangsstellung in eine Filtrierstellung gebracht. Zu diesem Zweck wird der Filtertopf innerhalb des Kaffeebehälters aufwärts in eine obere Filtrierstellung bewegt. Das Kaffeegetränk läuft dabei durch das Filtersieb hindurch in den Kaffeebehälter. Der Filtertopf ist in den beiden Funktionsstellungen, nämlich in der Ausgangsstellung am Boden des Kaffeebehälters und in der oberen Filtrierstellung, durch mechanische Kupplungsorgane fixierbar, wobei die Fixierung und Lösung derselben durch Drehbewegung des Filtertopfes relativ zum Kaffeebehälter bewirkt wird.

Die zusammenwirkenden Behälter (Filtertopf und Kaffeebehälter) sind voneinander trennbar, insbesondere zum Zwecke der Entleerung und Reinigung des Filtertopfes inkl. Filtersieb durch Spülung vorzugsweise mit heißem Wasser von außen (d.h. der Unterseite des Filtersiebes) und von innen.

Weitere Einzelheiten und Merkmale der Erfindung werden nachfolgend anhand der Zeichnungen erläutert. Es zeigt:
- Fig. 1: die Vorrichtung zur Zubereitung eines Filterkaffee-Getränkes in der Ausgangsstellung im Vertikalschnitt,
- Fig. 2: eine Darstellung der Vorrichtung während der Filtrierstellung, ebenfalls im Vertikalschnitt,
- Fig. 3: die Stellung der Vorrichtung entsprechend Fig. 2, in Seitenansicht,
- Fig. 4: einen Verankerungsring am Kaffeebehälter im Axialschnitt,
- Fig. 5: den Verankerungsring im Quer- bzw. Horizontalschnitt.

Die Vorrichtung besteht aus zwei Behältern bzw. Gefäßen mit unterschiedlichen Funktionen.

Es handelt sich dabei zum einen um einen Filtertopf 10 und um einen Sammelbehälter für das fertige Getränk - nachfolgend Kaffeebehälter 11. Filtertopf 10 und Kaffeebehälter 11 sind hinsichtlich Form und Größe aufeinander abgestimmt. Der (zylindrische) Filtertopf 10 ist innerhalb des ebenfalls zylindrischen Kaffeebehälters 11 angeordnet, der Filtertopf 10 mit kleinerem Durchmesser.

Der Filtertopf 10 besteht aus einer Wand 12 aus Metall, Glas oder vorzugsweise Kunststoff. An der Oberseite ist der Filtertopf 10 offen. An der Unterseite bildet den Behälterboden ein Filtersieb 13, das vorzugsweise die gesamte Bodenfläche des Filtertopfes 10 einnimmt. Das Filtersieb 13 ist als Dauerfilter ausgebildet und besteht aus einem engmaschigen Gewebe (z.B. 5 µ) aus Edelstahl oder Kunststoff. Das Filtersieb 13 ist als eigenständiges Bauteil lösbar mit dem Filtertopf 10 verbunden. Zu diesem Zweck ist das Filtersieb 13 von einem aus Kunststoff bestehenden Ring mit Gewinde eingefasst, über den das Filtersieb 13 mit dem Filtertopf 10, der im unteren Bereich ebenfalls ein Gewinde aufweist, verbunden ist.

Der Kaffeebehälter 11 als Außenbehälter mit einer Außenwandung 14 ist ebenfalls an der Oberseite offen. Eine Bodenwand 15 bildet einen unteren Abschluss des Kaffeebehälters 11. Auch dieser kann aus Metall, Glas, Kunststoff (oder einer Kombination dieser Materialien) bestehen.

Der Filtertopf 10 ist konzentrisch innerhalb des Kaffeebehälters 11 angeordnet. In der Ausgangsstellung ist der Filtertopf 10 auf der Bodenwand 15 des Kaffeebehälters 11 abgestützt, und zwar mit dichtendem Anpressdruck.

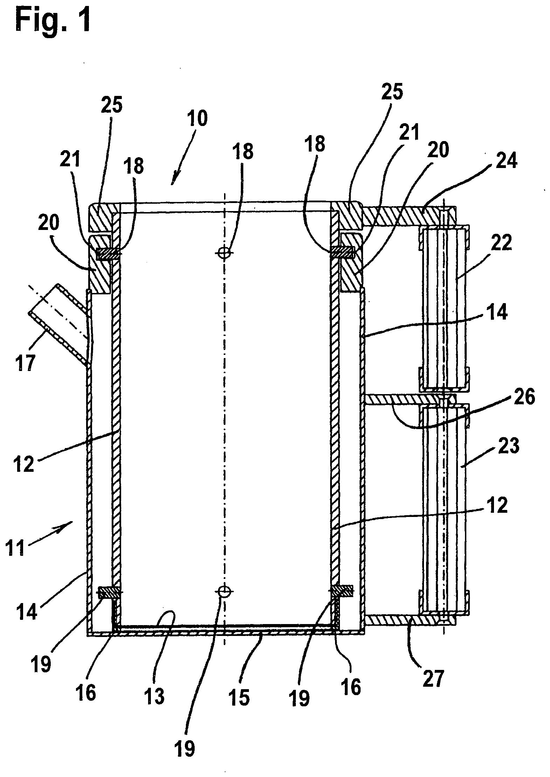

Bei der Zubereitung des Kaffeegetränkes wird in der Ausgangsstellung gemäß Fig. 1 entsprechend der durch die Vorrichtung umsetzbaren Vorgehensweise als erstes kochendes Wasser in den Filtertopf 10 gegossen, abgestimmt auf die gewünschte Stärke und Menge des herzustellenden Kaffeegetränkes. Danach wird eine ebenfalls abgestimmte Menge an gemahlenem Röstkaffee (Kaffeemehl) in das Wasser gegeben und mit diesem verrührt bzw. bei kleineren Mengen Wasser und Kaffeemehl durch Schwenken der Filtervorrichtung mit diesem vermischt. Auch durch unterschiedliche Ziehzeiten bzw. Kontaktzeiten kann die Stärke des Kaffeegetränkes beeinflusst werden.

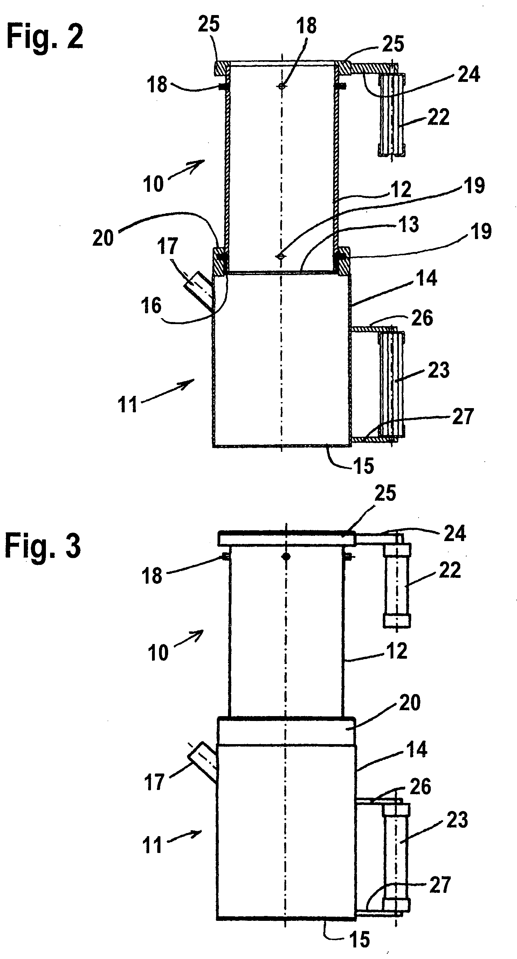

Der Filtriervorgang wird eingeleitet durch Anheben des Filtertopfes 10 in die Filtrierstellung entsprechend Fig. 2. Jetzt tritt das Kaffeegetränk durch das Filtersieb 13 hindurch in den Kaffeebehälter 11. Der Kaffeesatz wird dabei auf dem Filtersieb 13 zurückgehalten. Das fertige Kaffeegetränk im Kaffeebehälter 11 kann in einen anderen Behälter bzw. eine Kanne umgefüllt oder unmittelbar in Trinkgefäße gegossen werden. Zu diesem Zweck ist der Kaffeebehälter 11 mit einer Tülle 17 für den Ausguss des Kaffeegetränkes versehen.

Die Vorrichtung ist so ausgebildet, dass der Filtertopf 10 zwei fixierbare Stellungen innerhalb des Kaffeebehälters 11 einnimmt, nämlich einerseits die Ausgangsstellung gemäß Fig. 1 und andererseits die Filtrierstellung gemäß Fig. 2 und Fig. 3. Darüber hinaus kann der Filtertopf 10 vollständig von dem Kaffeebehälter 11 abgenommen werden für eine Entleerung und Reinigung des Filtertopfes 10 inklusive Filtersieb 13 durch Spülung mit vorzugsweise warmem bis heißem Wasser von außen und innen.

Der Filtertopf 10 und der Kaffeebehälter 11 sind in den Endstellungen durch mechanische Arretierungen fixiert. Vorliegend sind an der Außenseite des Filtertopfes 10 radial gerichtete Verankerungszapfen 18, 19 angeordnet, und zwar benachbart zum unteren Rand einerseits und zum oberen Rand des Filtertopfes 10 andererseits. Die oberen Verankerungszapfen 18 fixieren den Filtertopf 10 in der Ausgangsstellung gemäß Fig. 1, vorzugsweise derart, dass der Filtertopf 10 mit einem gewissen Druck an der Bodenwand 15 abgestützt ist. Die unteren Verankerungszapfen 19 bewirken die Arretierung des Filtertopfes 10 in der Filtrierstellung entsprechend Fig. 2.

Das Beispiel ist so ausgebildet, dass jeweils vier radial gerichtete Verankerungszapfen 18, 19 längs des Umfangs des Filtertopfes 10 verteilt sind. Diese Verankerungszapfen 18, 19 wirken zusammen mit Verankerungsstücken am Kaffeebehälter 11, vorliegend mit einem ringsherum laufenden Verankerungsring 20, der am oberen Ende bzw. am oberen Endbereich der Wandung des Kaffeebehälters 11, nämlich an der Außenwand 14, angebracht ist. Der mit entsprechenden Abmessungen ausgebildete Verankerungsring 20 ist um die Wandungsstärke nach innen versetzt angeordnet, derart, dass der im Durchmesser kleinere Filtertopf 10 eng, nämlich mit geringem Abstand, von dem Verankerungsring 20 umfasst ist.

Der Verankerungsring 20 ist mit Nuten 21 an der Innenseite versehen, in die die Verankerungszapfen 18, 19 je nach Stellung des Filtertopfes 10 eintreten. Die jedem Zapfen 18, 19 zugeordneten Nuten 21 sind so angeordnet, dass die Verankerung des Filtertopfes 10 in der jeweiligen Stellung durch seine relative Drehbewegung zum Kaffeebehälter 11 bewirkt wird (Bajonett-Verbindung). In der Ausgangsstellung gemäß Fig. 1 wird durch die Verankerung der (oberen) Zapfen 18 in dem Verankerungsring 20 zugleich der Anpressdruck für den Filtertopf 10 an der Bodenwand 15 erzeugt.

Die Verankerung der unteren Zapfen 19 in dem Verankerungsring 20 ist in besonderer Weise ausgebildet, nämlich derart, dass nach Beendigung des Filtriervorgangs der Filtertopf 10 von dem Kaffeebehälter 11 abgenommen werden kann, und zwar durch entsprechende (weitere) Drehbewegung des Filtertopfes 10, so dass der Filtertopf 10 inklusive Filtersieb 13 wie oben beschrieben entleert und gereinigt werden kann.

Filtertopf 10 und Kaffeebehälter 11 sind zur Erfassung und damit zur Bedienung der Vorrichtung mit Handgriffen 22, 23 versehen. Der dem Filtertopf 10 zugeordnete Handgriff 22 ist über einen (einzigen) Verbindungssteg 24 am oberen Rand des Filtertopfes 10 befestigt. Dieser weist einen Verankerungsring 25 auf, der als oberes Endprofil des Filtertopfes 10 als nach außen gerichteter, ringsherum laufender Vorsprung ausgebildet ist. An diesem ist der Handgriff 22 bzw. der Verbindungssteg 24 befestigt.

Der Handgriff 23 ist mit einem oberen Verbindungssteg 26 und einem unteren Verbindungssteg 27 am Kaffeebehälter 11 angebracht, vorliegend unmittelbar an der Behälterwand 14. Durch die Anordnung und Ausbildung der Handgriffe 22, 23 kann die Vorrichtung in beschriebener Weise manuell bedient werden. Die Anordnung und Abmessung der Handgriffe 22, 23 ist so gewählt, dass auch in der Ausgangsstellung (Fig. 1) eine wechselseitige Beeinträchtigung vermieden ist.

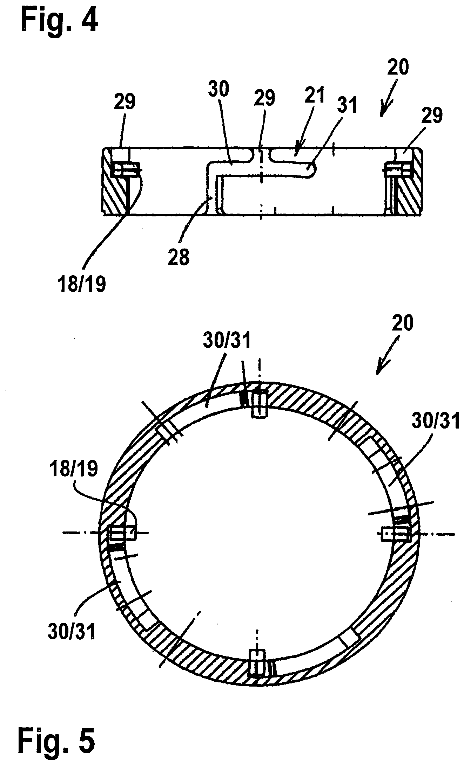

Ein Ausführungsbeispiel für den am oberen Randbereich des äußeren Behälters, also des Kaffeebehälters 11 befindlichen Verankerungsrings 20 ist in Fig. 4 und Fig. 5 dargestellt. Der vorzugsweise aus Kunststoff bestehende Ring ist mit den besonders ausgebildeten Nuten 21 versehen zum Verankern der (vier) Verankerungszapfen 18, 19. Jedem Verankerungszapfen ist eine Nut 21 an der Innenseite des Verankerungsrings 20 zugeordnet.

Die Nuten 21 sind so ausgewählt, dass sie die Verankerungsstellungen des Filtertopfes 10 innerhalb des Kaffeebehälters 11, aber auch die Herausnahme des Filtertopfes 10 aus dem Kaffeebehälter 11 ermöglichen. Jede Nut 21 besteht demnach aus axial gerichteten Nutschenkeln 28 und 29, die in die eine oder andere Richtung offen sind für die Einführung und den Austritt eines Zapfens 18, 19. Die Nutschenkel sind durch einen in Umfangsrichtung des Verankerungsrings 20 laufenden Verankerungsschenkel 30 miteinander verbunden. Dieser erstreckt sich vom Nutschenkel 28 über den versetzt angeordneten Nutschenkel 29 hinaus bis zu einem Verankerungsende 31.

In den Positionen der Verankerung des Filtertopfes 10 und des Kaffeebehälters 11 ineinander, also in der Stellung gemäß Fig. 1 und in der Stellung gemäß Fig. 2/Fig. 3, wird der betreffende, zugeordnete Verankerungszapfen 18 oder 19 über den - nach unten offenen - Nutschenkel 28 durch entsprechende Relativbewegung in die Nut 21 eingeführt. Nach Erreichen des Verankerungsschenkels 30 erfolgt eine entsprechende Drehung der Behälter des Filtertopfes 10 und des Kaffeebehälters 11 relativ zueinander, sodass der betreffende Verankerungszapfen 18 oder 19 bis in den Bereich des Verankerungsendes 31 der Nut 21 geführt ist. Nun sind die Behälter in der betreffenden Relativstellung zueinander fixiert.

Wenn der innere Behälter, also der Filtertopf 10, aus der unteren Ausgangsstellung (Fig. 1) in die obere Filtrierstellung (Fig. 2) gebracht werden soll, wird zuerst durch entsprechende Drehbewegung der betreffende (obere) Verankerungszapfen 18 in den Bereich des nach oben offenen Nutschenkels 29 bewegt. Über diesen kann der betreffende Zapfen 18 aus der Verankerung bewegt und der Filtertopf 10 in die obere Stellung gelangen. In dieser wird dann die Verankerung mit Hilfe der unteren Verankerungszapfen 19 in der beschriebenen Weise wiederholt. Ebenso die Lösung der Verankerung, wenn der Filtertopf 10 vom Kaffeebehälter 11 getrennt werden soll, z. B. zum Zwecke der Entleerung und Reinigung.

### Bezugszeichenliste:

- 10: Filtertopf
- 11: Kaffeebehälter
- 12: Filtertopfwand
- 13: Filtersieb
- 14: Kaffeebehälterwand
- 15: Bodenwand des Kaffeebehälters
- 16: Filtersieb-Einfassung
- 17: Tülle
- 18: Verankerungszapfen
- 19: Verankerungszapfen
- 20: Verankerungsring
- 21: Nut
- 22: Handgriff
- 23: Handgriff
- 24: Verbindungssteg
- 25: Verankerungsring
- 26: Verbindungssteg
- 27: Verbindungssteg
- 28: Nutschenkel
- 29: Nutschenkel
- 30: Verankerungsschenkel
- 31: Verankerungsende

## Patentansprüche

1. Vorrichtung zum manuellen Herstellen eines Filterkaffee-Getränkes mit einem Sammelbehälter, nachfolgend Kaffeebehälter (11) und mit einem Aufnahme-Gefäß für Wasser und Kaffee, nachfolgend Filtertopf (10), der im Bodenbereich ein feinmaschiges Siebgewebe aus Metall oder Kunststoff, nachfolgend Filtersieb (13), aufweist, das den wässerigen Kaffeeauszug von dem nicht gelösten Feststoffanteil trennt, und wobei der Filtertopf (10) innerhalb des Kaffeebehälters (11) angeordnet und innerhalb des Kaffeebehälters (11) in Längsrichtung zwischen einer Ausgangsstellung und einer Filtrierstellung bewegbar ist, und wobei der Filtertopf eine geschlossene Wand (12) aufweist, **dadurch gekennzeichnet, dass** der Filtertopf (10) in der Ausgangsstellung unter Abstützung auf einer Bodenwand (15) des Kaffeebehälters (11) zur Aufnahme des siedenden Wassers und des gemahlenen Kaffees (Kaffeemehl) dient, der durch Rühren oder durch Schwenken der Filtervorrichtung in dem erhitzten Wasser verteilt wird, wobei der Filtertopf (10) gegenüber dem Boden des Kaffeebehälters (11) abgedichtet ist, und dass der Filtertopf (10) durch Anheben in die Filtrierstellung gebracht wird, so dass das Kaffeegetränk, d.h. das mit den wasserlöslichen Feststoffanteilen des Kaffees gesättigte Wasser, in den Kaffeebehälter (11) läuft.

2. Vorrichtung nach Anspruch 1, **dadurch gekennzeichnet, dass** der Filtertopf (10) innerhalb des Kaffeebehälters (11) in der Ausgangsstellung einerseits und in der Filtrierstellung andererseits fixierbar ist.

3. Vorrichtung nach Anspruch 1 oder 2, **dadurch gekennzeichnet, dass** der Filtertopf (10) in seinen jeweiligen Stellungen innerhalb des Kaffeebehälters (11) durch formschlüssig zusammenwirkende Verankerungsorgane lösbar fixiert ist, nämlich durch Verankerungszapfen (18, 19) an der Außenseite des Filtertopfes (10) und durch Gegenorgane, nämlich durch Verankerungsstücke bzw. durch einen Verankerungsring (20) an der Innenseite eines oberen, freien Endbereichs der Seitenwand (14) des Kaffeebehälters (11), wobei der Verankerungsring (20) Nuten (21) für den lösbaren Eintritt der Verankerungszapfen (18, 19) aufweist.

4. Vorrichtung nach Anspruch 3, **dadurch gekennzeichnet, dass** die Nuten (21) des Verankerungsrings (20) zur Aufnahme der Verankerungszapfen (19) in der Filtrierstellung des Filtertopfes (10) so ausgebildet bzw. angeordnet sind, dass nach Beendigung des Filtriervorgangs der Filtertopf (10) durch (weitere) Drehbewegung von dem Kaffeebehälter (11) lösbar ist, insbesondere zum Entleeren und Reinigen des Filtertopfes (10) samt Filtersieb (13).

5. Vorrichtung nach Anspruch 1 oder einem der weiteren Ansprüche, **dadurch gekennzeichnet, dass** das runde Filtersieb (13) in einem unteren Endbereich des Filtertopfes (10), mit geringem Abstand oder bündig zur Behälterwand (12) des Filtertopfes (10) lösbar fixiert ist, derart, dass das Filtersieb (13) durch Betätigen seiner als Gewindering ausgebildeten Einfassung (16) vom Filtertopf (10) abnehmbar ist.

6. Vorrichtung nach Anspruch 1 oder einem der weiteren Ansprüche, **dadurch gekennzeichnet, dass** am Filtertopf (10) und am Kaffeebehälter (11) Handgriffe (22, 23) angebracht sind, die auch der Durchführung der Bewegungen des Filtertopfes (10) in Längsrichtung und durch Drehen in horizontaler Richtung innerhalb des Kaffeebehälters (11) dienen.

7. Verfahren zum manuellen Herstellen eines Filterkaffee-Getränkes mittels einer Vorrichtung nach einem der Ansprüche 1-6, **dadurch gekennzeichnet, dass** zunächst das siedende Wasser in den Filtertopf (10) gegossen wird und danach der gemahlene Kaffee (Kaffeemehl) in das Wasser gegeben wird, und dass danach der gemahlene Kaffee (Kaffeemehl) durch Rühren oder durch Schwenken der Filtervorrichtung in dem erhitzten Wasser verteilt wird, und dass der Filtertopf (10) danach durch Anheben von der Ausgangsstellung in die Filtrierstellung gebracht wird, so dass das Kaffeegetränk, d.h. das mit den wasserlöslichen Feststoffanteilen des Kaffees gesättigte Wasser, in den Kaffeebehälter (11) läuft.

## Claims

1. Device for manually producing a filtered coffee beverage with a collecting container, hereinafter coffee container (11), and with a receiving receptacle for water and coffee, hereinafter filter pot (10), which in the bottom region has a fine-mesh screen fabric made of metal or plastic, hereinafter filter screen (13), which separates the aqueous coffee extract from the undissolved solid fraction, and wherein the filter pot (10) is arranged inside the coffee container (11) and is movable in the longitudinal direction inside the coffee container (11) between a starting position and a filtering position, and wherein the filter pot has a closed wall (12), **characterized in that** the filter pot (10), in the starting position, is supported on a bottom wall (15) of the coffee container (11) and serves to receive the boiling water and the ground coffee, which is dispersed in the heated water by stirring or by means of shaking the filter device, and wherein the filter pot (10) is sealed off in relation to the bottom of the coffee container (11), and **in that** the filter pot (10) is lifted to the filtering position, such that the coffee beverage, i.e. the water saturated with the water-soluble solid fractions of the coffee, runs into the coffee container (11).

2. Device according to Claim 1, **characterized in that** the filter pot (10) inside the coffee container (11) can be fixed in the starting position on the one hand and in the filtering position on the other hand.

3. Device according to Claim 1 or 2, **characterized in that** the filter pot (10) is fixed releasably in its respective positions inside the coffee container (11) by anchoring elements which interact with form-fit engagement, namely by anchoring pins (18, 19) on the outside of the filter pot (10) and by mating elements, namely by anchoring pieces or by an anchoring ring (20) on the inside of an upper, free end region of the side wall (14) of the coffee container (11), wherein the anchoring ring (20) has grooves (21) for the releasable engagement of the anchoring pins (18, 19).

4. Device according to Claim 3, **characterized in that** the grooves (21) of the anchoring ring (20) are designed and arranged to receive the anchoring pins (19) in the filtering position of the filter pot (10) such that, after completion of the filtering process, the filter pot (10) is releasable from the coffee holder (11) by (further) rotational movement, in particular for emptying and cleaning the filter pot (10) and filter screen (13).

5. Device according to Claim 1 or one of the further claims, **characterized in that** the round filter screen (13), in a lower end region of the filter pot (10), is fixed releasably at a short distance from or flush with the container wall (12) of the filter pot (10), in such a way that the filter screen (13) is detachable from the filter pot (10) by actuation of its edge (16) designed as a threaded ring.

6. Device according to Claim 1 or one of the further claims, **characterized in that** handles (22, 23) are mounted on the filter pot (10) and on the coffee container (11), which handles (22, 23) also serve for carrying out the movements of the filter pot (10) in the longitudinal direction and, by rotation, in the horizontal direction inside the coffee container (11).

7. Method for manually producing a filtered coffee beverage by means of a device according to one of the Claims 1-6, **characterized in that** the boiling water is first poured into the filter pot (10) and afterwards the ground coffee is added to the water, and **in that** subsequently the ground coffee is dispersed in the heated water by stirring or by means of shaking the filter device, and **in that** the filter pot (10) is then lifted from the starting position to the filtering position, such that the coffee beverage, i.e. the water saturated with the water-soluble solid fractions of the coffee, runs into the coffee container (11).

## Revendications

1. Dispositif pour la préparation manuelle d'une boisson à base de café filtré comprenant un contenant de collecte, par la suite contenant à café (11), et comprenant un récipient de réception pour de l'eau et du café, par la suite cuve de filtre (10), qui comprend dans la zone de fond un tissu de tamisage à mailles fines en métal ou matière plastique, par la suite tamis de filtre (13), qui sépare l'extrait de café aqueux de la fraction solide non dissoute, et dans lequel la cuve de filtre (10) est agencée à l'intérieur du contenant à café (11) et peut être déplacée à l'intérieur du contenant à café (11) dans la direction longitudinale entre une position initiale et une position de filtration, et dans lequel la cuve de filtre comprend une paroi fermée (12), **caractérisé en ce que** la cuve de filtre (10) dans la position initiale, en appui sur une paroi de fond (15) du contenant à café (11), sert à recevoir l'eau en ébullition et le café moulu (mouture de café), qui est réparti par agitation ou basculement du dispositif de filtre dans l'eau chauffée, la cuve de filtre (10) étant étanchéifiée par rapport au fond du contenant à café (11), et **en ce que** la cuve de filtre (10) est amenée dans la position de filtration par levage, de telle sorte que la boisson à base de café, c.-à-d. l'eau saturée avec les fractions solides solubles dans l'eau du café, s'écoule dans le contenant à café (11).

2. Dispositif selon la revendication 1, **caractérisé en ce que** la cuve de filtre (10) peut être fixée à l'intérieur du contenant à café (11) dans la position initiale d'un côté et dans la position de filtration d'un autre côté.

3. Dispositif selon la revendication 1 ou 2, **caractérisé en ce que** la cuve de filtre (10) est fixée de manière amovible dans ses positions respectives à l'intérieur du contenant à café (11) par des organes d'ancrages coopérant par accouplement de forme, à savoir par des chevilles d'ancrage (18, 19) sur le côté extérieur de la cuve de filtre (10) et par des contre-organes, à savoir par des pièces d'ancrage ou par une bague d'ancrage (20) sur le côté intérieur d'une zone d'extrémité libre supérieure de la paroi latérale (14) du contenant à café (11), la bague d'ancrage (20) comprenant des rainures (21) pour l'entrée amovible des chevilles d'ancrage (18, 19).

4. Dispositif selon la revendication 3, **caractérisé en ce que** les rainures (21) de la bague d'ancrage (20) destinées à recevoir les chevilles d'ancrage (19) dans la position de filtration de la cuve de filtre (10) sont configurées ou agencées de telle sorte qu'après la fin du processus de filtration, la cuve de filtre (10) soit amovible du contenant à café (11) par mouvement de rotation (supplémentaire), notamment pour vider et nettoyer la cuve de filtre (10) et le tamis de filtre (13).

5. Dispositif selon la revendication 1 ou l'une quelconque des autres revendications, **caractérisé en ce que** le tamis de filtre rond (13) est fixé de manière amovible dans une zone d'extrémité inférieure de la cuve de filtre (10), avec un faible écart ou en affleurement par rapport à la paroi de contenant (12) de la cuve de filtre (10), de telle sorte que le tamis de filtre (13) puisse être enlevé de la cuve de filtre (10) par actionnement de sa bordure (16) configurée sous la forme d'une bague filetée.

6. Dispositif selon la revendication 1 ou l'une quelconque des autres revendications, **caractérisé en ce que** des poignées (22, 23) sont disposées sur la cuve de filtre (10) et sur le contenant à café (11), qui servent également à réaliser les mouvements de la cuve de filtre (10) dans la direction longitudinale et par rotation dans la direction horizontale à l'intérieur du contenant à café (11).

7. Procédé de préparation manuelle d'une boisson à base de café filtré au moyen d'un dispositif selon l'une quelconque des revendications 1 à 6, **caractérisé en ce que** tout d'abord l'eau en ébullition est versée dans la cuve de filtre (10) et ensuite le café moulu (mouture de café) est ajouté dans l'eau, et **en ce qu'**ensuite le café moulu (mouture de café) est réparti par agitation ou par basculement du dispositif de filtre dans l'eau chauffée, et **en ce que** la cuve de filtre (10) est ensuite amenée par levage à partir de la position initiale dans la position de filtration, de telle sorte que la boisson à base de café, c.-à-d. l'eau saturée avec les fractions solides solubles dans l'eau du café, s'écoule dans le contenant à café (11).
